(19) Europäisches Patentamt
European Patent Office
Office européen des brevets

(11) **EP 3 249 456 B1**

(12) **EUROPEAN PATENT SPECIFICATION**

(45) Date of publication and mention
of the grant of the patent:
**06.10.2021 Bulletin 2021/40**

(21) Application number: **16739998.9**

(22) Date of filing: **08.01.2016**

(51) Int Cl.:
*G02F 1/13363* (2006.01)    *G02B 27/01* (2006.01)
*G02B 5/30* (2006.01)    *G02F 1/1337* (2006.01)

(86) International application number:
**PCT/JP2016/050492**

(87) International publication number:
**WO 2016/117391 (28.07.2016 Gazette 2016/30)**

(54) **HEAD-UP DISPLAY DEVICE**

BLICKFELDANZEIGEVORRICHTUNG

DISPOSITIF D'AFFICHAGE TÊTE HAUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2015 JP 2015007960**

(43) Date of publication of application:
**29.11.2017 Bulletin 2017/48**

(73) Proprietor: **Toppan Printing Co., Ltd.
Taito-ku
Tokyo (JP)**

(72) Inventor: **OOSAWA, Kazuhiko
Hino-shi
Tokyo 191-0065 (JP)**

(74) Representative: **Nederlandsch Octrooibureau
P.O. Box 29720
2502 LS The Hague (NL)**

(56) References cited:
**JP-A- 2005 195 753      JP-A- 2009 053 614
JP-A- 2009 053 614      JP-A- 2009 258 346
JP-A- 2009 258 346      US-A1- 2002 154 256
US-A1- 2010 289 988      US-A1- 2012 120 349**

## Description

Technical Field

The present invention relates to a head-up display device.

Background Art

In a television which is, in many cases, viewed by a plurality of persons at the same time, a liquid crystal display with a wide viewing angle is required. In addition, also in a small-sized liquid crystal display which is used in an in-vehicle head-up display (HUD) device, a liquid crystal display with a wide viewing angle is required so that the driver or a person on the passenger seat can recognize display.

Conventionally, as the liquid crystal display with a wide viewing angle, use is made of a vertical alignment (VA) mode which utilizes a vertical electric field, or an IPS (In-Plane Switching) mode which utilizes a lateral electric field. However, in such liquid crystal displays, it is difficult to obtain the required wide viewing angle.

Citation List

Patent Literature

Patent document 1: Japanese Patent No. 5265614
Patent document 2: US 2010/0289988 A1 discloses an LCD device that has a higher constant ratio in a wide viewing angle and that can be easily produced at low cost. It discloses a liquid crystal display device, including in the following order: a first polarizer; a first birefringent layer; a first quarter-wave plate; a liquid crystal cell; a second quarter-wave plate; a second birefringent layer; and a second polarizer having an absorption axis orthogonal to an absorption axis of the first polarizer, wherein the first birefringent layer satisfies Nz>0.9 and has an in-plane slow axis orthogonal to the absorption axis of the first polarizer; the first quarter-wave plate has an in-plane slow axis forming an angle of about 45 degrees with the absorption axis of the first polarizer; the liquid crystal cell displays a black screen by aligning liquid crystal molecules in the liquid crystal cell vertically to a substrate surface; the second quarter-wave plate has an in-plane slow axis orthogonal to the in-plane slow axis of the first quarter-wave plate; and the second birefringent layer satisfies Nz<0.1 and has an in-plane slow axis parallel to the absorption axis of the second polarizer.
Patent document 3: US 2012/120349 A1 discloses a circularly polarizing VA mode liquid crystal display device having an excellent gray scale viewing angle from an intermediate gray scale to a high gray scale at an azimuth angle of 45 degrees. It discloses that the liquid crystal display device includes: a first polarizer; a first λ/4 plate; liquid crystal cell; a second λ/4 plate; and a second polarizer, wherein when an azimuth of an absorption axis of the second polarizer is defined as 0 degree, an in-plane slow axis of the second λ/4 plate forms an angle of approximately 45 degrees; an in-plane slow axis of the first λ/4 plate forms an angle of approximately 135 degrees; the absorption axis of the first polarizer forms an angle of approximately 90 degrees, and wherein a display brightness is varied by changing an alignment state of liquid crystal molecules in a liquid crystal layer from a state that the liquid crystal molecules are approximately vertically aligned to the substrate surface; and the liquid crystal layer has a domain in which the liquid crystal molecules are tilted in an azimuth angle range of 12.5 degrees to 35 degrees, a domain in which the liquid crystal molecules are tilted in an azimuth angle range of 102.5 degrees to 122.5 degrees, and a domain in which the liquid crystal molecules are tilted in an azimuth angle range of 192.5 degrees to 212.5 degrees, and a domain in which the liquid crystal molecules are tilted in an azimuth angle range of 282.5 degrees to 302.5 degrees.
Patent document 4: US 2002/154256 A1 discloses a liquid crystal display which includes a reflective liquid-crystal panel, a light guiding plate disposed on the reflective liquid-crystal panel, a polarizer arranged between a liquid-crystal layer of the reflective liquid-crystal panel and the light guiding plate, and a light source disposed on a side surface of the light guiding plate. Light emitted from the light source propagates through the light guiding plate and has a primary direction. A smaller one of two angles between a projection of the primary direction onto the reflective liquid-crystal panel and an absorption axis of the light guiding plate is at least 50 degrees, which is disclosed to improve performance of the liquid-crystal display.
Patent document 5: JP 2009 053614 A discloses a liquid crystal panel, and a liquid crystal display which used the lamination stacking optical film. It discloses a liquid crystal panel and a liquid crystal display using a polarizer, the lamination stacking optical film which has at least two optical compensation layers, and the said lamination stacking optical film. Also known from the prior art is JP2009258346 A disclosing a head-up display.

Summary of Invention

Technical Problem

The present invention provides a head-up display device, which can improve a viewing angle.

**Solution to Problem**

According to an aspect of the present invention, there is provided a head-up display device according to claim 1.

**Advantageous Effects of Invention**

According to the present invention, there can be provided a head-up display device, which can improve a viewing angle.

**Brief Description of Drawings**

FIG. 1 is a cross-sectional view illustrating a configuration of a liquid crystal display.
FIG. 2 is a perspective view illustrating a configuration of the liquid crystal display.
FIG. 3 is a perspective view illustrating a configuration of the liquid crystal display.
FIG. 4 is a cross-sectional view illustrating a configuration of a liquid crystal panel.
FIG. 5 is a view illustrating an operation of the liquid crystal display.
FIG. 6 is a view illustrating an operation of the liquid crystal display.
FIG. 7 is a schematic view illustrating an index ellipsoid of a first retardation plate.
FIG. 8 is a schematic view illustrating an index ellipsoid of a first TAC film.
FIG. 9 is a schematic view illustrating an index ellipsoid of a liquid crystal layer in an OFF state.
FIG. 10 is a schematic view illustrating an index ellipsoid of a second TAC film.
FIG. 11 is a schematic view illustrating an index ellipsoid of a second retardation plate.
FIG. 12 is a view showing all of the index ellipsoids of FIG. 7 to FIG. 11.
FIG. 13 is a view illustrating a simulation result of a contrast ratio corresponding to a viewing angle according to the present embodiment.
FIG. 14 is a cross-sectional view which schematically illustrates a head-up display device according to the embodiment.
FIG. 15 is a cross-sectional view illustrating a configuration of a liquid crystal display according to a comparative example.
FIG. 16 is a view illustrating index ellipsoids according to the comparative example.
FIG. 17 illustrates a simulation result of a contrast ratio corresponding to a viewing angle according to the comparative example.

**Description of Embodiments**

The embodiments of the present invention will be described below with reference to the accompanying drawings. Note that the drawings are schematic and conceptual, and the dimensions, ratios, and the like in the respective drawings are not necessary the same as those in reality. In addition, even the same portion may be shown in a different dimensional relationship or with different ratios in different drawings. Several embodiments to be described below represent examples of apparatuses and methods for embodying the technical idea of the present invention, and the technical idea of the present invention is not specified by the shapes, structures, and layouts of the constituent parts. Note that in the following explanation, the same reference numerals denote elements having the same functions and arrangements, and a repetitive explanation will be made only when necessary. (Definitions of terms and signs)

The definitions of terms and signs in the present specification are as follows.

(1) Refractive index ($n_x$, $n_y$, $n_z$)

Sign "$n_x$" is a refractive index in a direction in which an in-plane refractive index is maximum (i.e. in a slow axis direction). Sign "$n_y$" is a refractive index in a direction perpendicular to a slow axis in the plane (i.e. in a fast axis direction). Sign "$n_z$" is a refractive index in an out-of-plane direction.

The relationship between the refractive index $n_x$ in the x direction (slow axis) and the refractive index $n_y$ in the y direction (fast axis) is expressed by the following formula:

$$n_x \geqq n_y$$

(2) In-plane retardation ($R_o$)

Sign "$R_o$" is an in-plane retardation of a film, which is measured with light of a wavelength $\lambda$ (nm).

An arbitrary wavelength $\lambda$ in the neighborhood of the center of visible light, for example, between 500 nm and 600 nm, is used. When the thickness of the film is d (nm), the in-plane retardation $R_o$ is given by:

$$R_o = (n_x - n_y) \times d$$

(3) Out-of-plane retardation ($R_{th}$)

Sign "$R_{th}$" is an out-of-plane retardation of a film, which is measured with light of a wavelength $\lambda$ (nm). When the thickness of the film is d (nm), the out-of-plane retardation $R_{th}$ is given by:

$$R_{th} = \{(n_x + n_y)/2 - n_z\} \times d$$

(4) $N_z$ coefficient

An $N_z$ coefficient is given by

$$N_z = (n_x - n_z)/(n_x - n_y)$$

(5) Negative C plate

A negative C plate is a retardation film in which an index ellipsoid, which schematically indicates a relationship of refractive indices, has a relationship of "$n_x = n_y > n_z$".

[1] Configuration of liquid crystal display

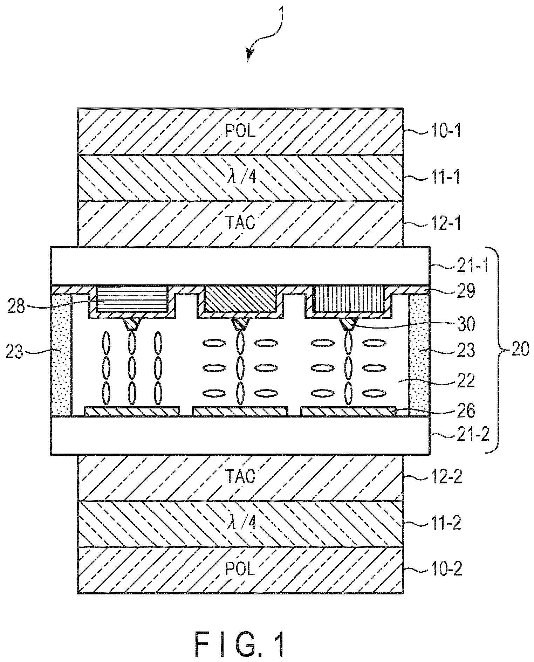

FIG. 1 is a cross-sectional view illustrating a configuration of a liquid crystal display 1. The liquid crystal display 1 includes a liquid crystal panel (LCP) 20, a pair of polarizers (POL) 10-1 and 10-2, a pair of retardation plates ($\lambda/4$) 11-1 and 11-2, and a pair of TAC (triacetyl cellulose) films 12-1 and 12-2. In FIG. 1, in order to make easier the understanding of the drawing, sign "POL" is added to the polarizers, and sign "$\lambda/4$" is added to the retardation plates.

On one major surface of the liquid crystal panel 20, the TAC film 12-1, retardation plate 11-1 and polarizer 10-1 are successively stacked. On the other major surface of the liquid crystal panel 20, the TAC film 12-2, retardation plate 11-2 and polarizer 10-2 are successively stacked.

The liquid crystal panel 20 has a vertical alignment (VA) mode. The liquid crystal panel 20 has an OFF state in which an electric field is not applied to a liquid crystal layer (a voltage across the liquid crystal layer is substantially zero), and an ON state in which an electric field is applied to the liquid crystal layer (a positive voltage is applied across the liquid crystal layer). In the VA type liquid crystal panel 20, liquid crystal molecules are vertically aligned in the OFF state, and the liquid crystal molecules tilt toward the horizontal direction in the ON state. A concrete configuration of the liquid crystal panel 20 will be described later.

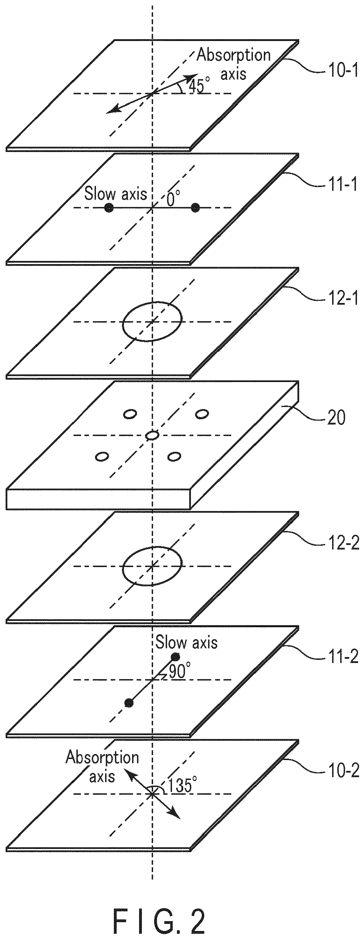

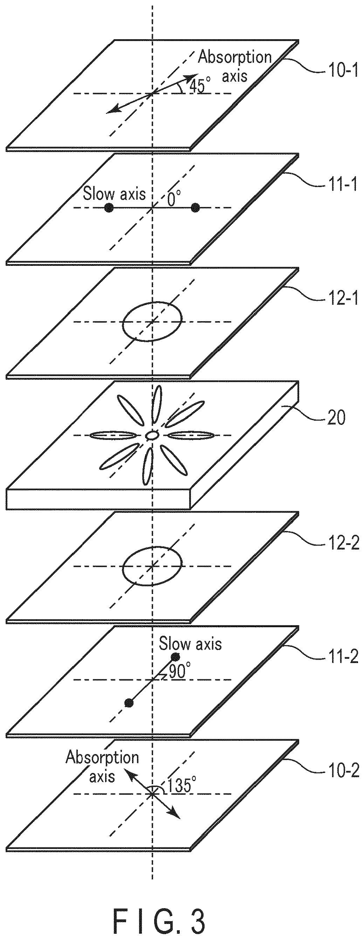

FIG. 2 and FIG. 3 are perspective views illustrating the configuration of the liquid crystal display 1. FIG. 2 schematically illustrates the liquid crystal panel 20 in the OFF state, and FIG. 3 schematically illustrates the liquid crystal panel 20 in the ON state. In FIG. 2 and FIG. 3, two dot-and-dash lines shown on each layer are mutually orthogonal reference lines. Top views of index ellipsoids are schematically shown with respect to the TAC films 12-1 and 12-2, and liquid crystal layer 22.

The polarizer 10-1, 10-2 has a transmission axis and an absorption axis which are perpendicular to each other in a plane perpendicular to a direction of travel of light. Of light having vibration planes in random directions, the polarizer 10-1, 10-2 transmits linearly polarized light (a linearly polarized light component) having a vibration plane parallel to the transmission axis, and absorbs linearly polarized light (a linearly polarized light component) having a vibration plane parallel to the absorption axis. The polarizers 10-1 and 10-2 are disposed such that their transmission axes are perpendicular to each other, that is, in a state of crossed Nicols. In the example of FIG. 2, the absorption axis of the polarizer 10-1 is set at an angle of about 45° relative to the reference axis.

The retardation plate 11-1, 11-2 has a refractive index anisotropy, and has a slow axis and a fast axis, which are perpendicular to each other, in the plane perpendicular to the direction of travel of light. The retardation plate 11-1, 11-2 has a function of imparting a predetermined retardation (a retardation of $\lambda/4$ when $\lambda$ is the wavelength of transmissive light) between lights of a predetermined wavelength, which pass through the slow axis and fast axis. Specifically, the retardation plates 11-1 and 11-2 are composed of $\lambda/4$ plates. The retardation plate 11-1, 11-2 has a function of converting linearly polarized light to circularly polarized light, or converting circularly polarized light to linearly polarized light.

The retardation plates 11-1 and 11-2 are disposed such that their slow axes are perpendicular to each other. The slow axis of the retardation plate 11-1 is set at an angle of about 45° relative to the absorption axis of the polarizer 10-1. The slow axis of the retardation plate 11-2 is set at an angle of about 45° relative to the absorption axis of the polarizer 10-2. Incidentally, it is assumed that the angles, which define the above-described polarizers and retardation plates, include an error which permits realization of a desired operation, and an error due to fabrication steps. For example, it is assumed that the above-mentioned "about 45°" includes a range of 45°±5°. In addition, it is assumed that the above-mentioned "perpendicular" includes a range of 90°±5°.

The TAC film 12-1, 12-2 is a retardation film (retardation compensation film) having a function of imparting a retardation to transmissive light. The TAC film 12-1, 12-2 is composed of a negative C plate. The structure of the TAC film 12-1, 12-2 will be described later.

(Configuration of liquid crystal panel 20)

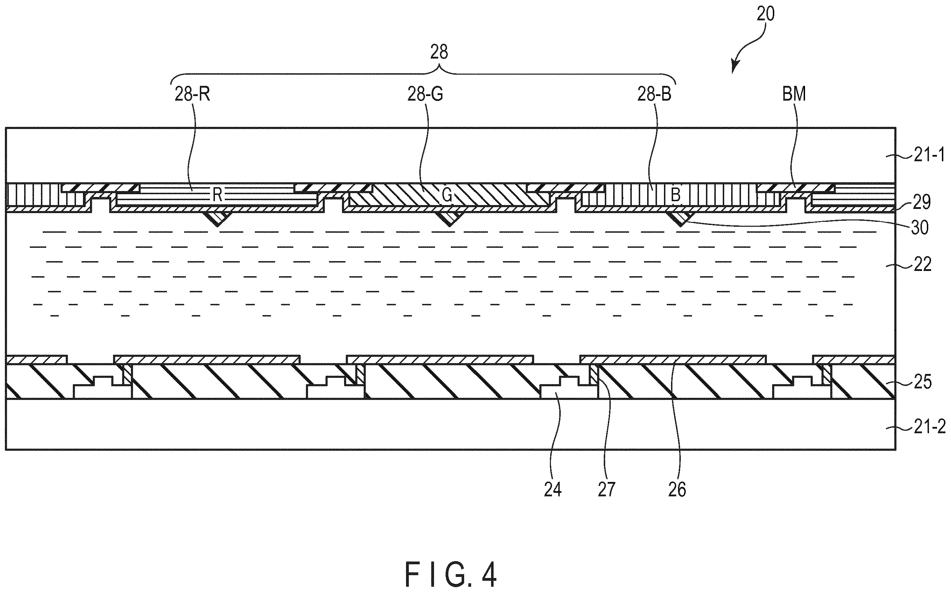

Next, an example of the configuration of the liquid crystal panel 20 will be described. FIG. 4 is a cross-sectional view illustrating a configuration of the liquid crystal panel 20.

The liquid crystal panel 20 includes a color filter substrate (CF substrate) 21-1 on which a color filter and a common electrode are formed; a TFT substrate 21-2 on which switching elements (TFTs) and pixel electrodes are formed, and which is disposed to be opposed to the CF substrate 21-1; and a liquid crystal layer 22 which is held between the CF substrate 21-1 and TFT substrate 21-2. Each of the CF substrate 21-1 and TFT substrate 21-2 is composed of a transparent substrate (e.g. a glass substrate). The TFT substrate 21-2 is disposed to be opposed to a light source unit (backlight), and illumination light from the backlight is made incident on the liquid crystal panel 20 from the TFT substrate 21-2 side.

The liquid crystal layer 22 is composed of a liquid crystal material which is sealed by a seal member 23 that attaches the CF substrate 21-1 and TFT substrate 21-2. The optical characteristics of the liquid crystal material vary by the alignment of liquid crystal molecules being operated in accordance with an electric field which is applied between the CF substrate 21-1 and TFT substrate 21-2. In addition, the liquid crystal layer 22 is composed of a liquid crystal layer including liquid crystal molecules having dielectric anisotropy, and is composed of, for instance, a nematic liquid crystal.

As described above, the VA mode is used as the liquid crystal mode. Specifically, the liquid crystal layer 22 is formed of a positive-type (p-type) liquid crystal material, and is substantially vertically aligned relative to the substrate surface in a state in which no voltage (electric field) is applied (an initial alignment state). In the meantime, although not illustrated, alignment films, which control the alignment of the liquid crystal layer 22, are provided on those surfaces of the CF substrate 21-2 and TFT substrate 21-2, which are put in contact with the liquid crystal layer 22.

A plurality of switching elements 24 are provided on the liquid crystal layer 22 side of the TFT substrate 21-2. For example, a TFT (Thin Film Transistor) is used as the switching element 24. The TFT 24 includes a gate electrode which is electrically connected to a scanning line; a gate insulating film provided on the gate electrode; a semiconductor layer (e.g. an amorphous silicon layer) provided on the gate insulating film; and a source electrode and a drain electrode provided, spaced apart from each other, on the semiconductor layer. The source electrode is electrically connected to a signal line.

An insulating layer 25 is provided on the TFTs 24. A plurality of pixel electrodes 26 are provided on the insulating layer 25. Contact plugs 27, which are electrically connected to the pixel electrodes 26, are provided in the insulating layer 25 and on the drain electrodes of the TFTs 24.

A color filter 28 is provided on the liquid crystal layer 22 side of the CF substrate 21-1. The color filter 28 includes a plurality of colored filters (colored members). Specifically, the color filter 28 includes a plurality of red filters 28-R, a plurality of green filters 28-G, and a plurality of blue filters 28-B. A general color filter is composed of red (R), green (G) and blue (B), which are the three primary colors of light. A set of neighboring three colors of R, G and B constitutes a unit (pixel) of display. A single-color part of any one of R, G and B in one pixel is a minimum driving unit that is called "sub-pixel". The TFT 24 and pixel electrode 26 are provided for each sub-pixel. In the description below, the sub-pixel is referred to as "pixel", except for a case in which distinction between a pixel and a sub-pixel is particularly necessary.

A black matrix (light shield film) BM for light shielding is provided at boundary portions between the red filter 28-R, green filter 28-G and blue filter 28-B, and at boundary portions between pixels (sub-pixels). Specifically, the black matrix BM is formed in a lattice shape. The black matrix BM is provided, for example, in order to block unnecessary light between the colored members, and to enhance a contrast.

A common electrode 29 is provided on the color filter 28 and black matrix BM. The common electrode 29 is formed in a planar shape over the entire display area of the liquid crystal panel 20.

Protrusions 30 are provided on the common electrode 29 in association with the respective pixels. The protrusion 30 is formed of, for example, a resin, and has, for example, a conical shape. The protrusion 30 has a function of controlling the direction of tilting of liquid crystal molecules. By these protrusions 30, the liquid crystal layer 22 is composed of a plurality of regions (domains) in which the directions of tilting of liquid crystal molecules are different. Specifically, the liquid crystal panel 20 employs a socalled multi-domain method. By using the multi-domain method, the viewing angle dependency can be reduced.

The pixel electrodes 26, contact plugs 27 and common electrode 29 are composed of transparent electrodes, and, for example, ITO (indium tin oxide) is used. As the insulating layer 25, a transparent insulating material is used, and, for example, silicon nitride (SiN) is used.

[2] Operation

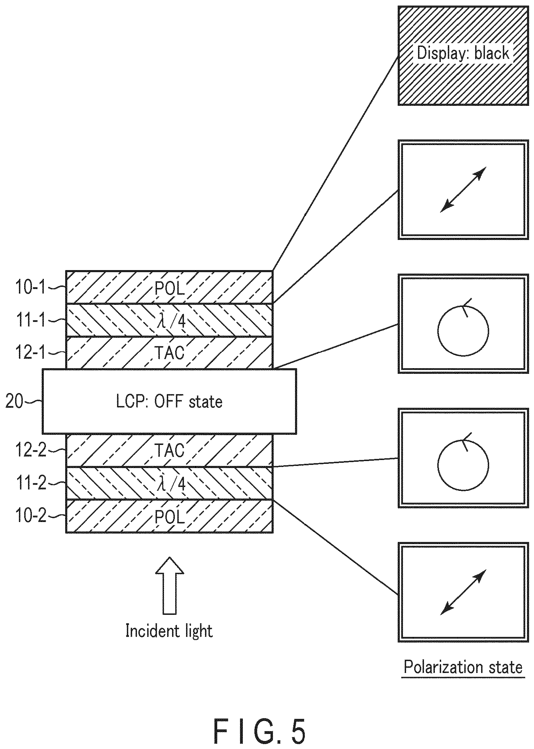

Next, the operation of the liquid crystal display 1 with the above-described configuration will be described. FIG. 5 is a view illustrating an operation of the liquid crystal display 1 in the OFF state. FIG. 5 illustrates an alignment state as viewed from the display surface side (the upper side of the cross-sectional view). Incidentally, in the operation below, a description will be given of light traveling in a direction perpendicular to the screen.

In the OFF state, liquid crystal molecules of the liquid crystal layer 22 are aligned such that their major axes are aligned in the vertical direction. Incident light from the backlight passes through the polarizer 10-2 and becomes linearly polarized light, and further passes through the retardation plate 11-2 and becomes circularly polarized light. The refractive index anisotropy of the liquid crystal layer 22 in a plane parallel to the substrate is substantially zero. Thus, the circularly polarized light passes through the liquid crystal layer 22, with substantially the same state being kept. Subsequently, the circularly polarized light, which emerges from the liquid crystal layer 22, passes through the retardation plate 11-1 and becomes linearly polarized light. Since this linearly polarized light is parallel to the absorption axis of the polarizer 10-1, the linearly polarized light is absorbed by the polarizer 10-1. Thus, in the OFF state, the liquid crystal display 1 effects black display. Specifically, the liquid crystal display 1 is a normally black type.

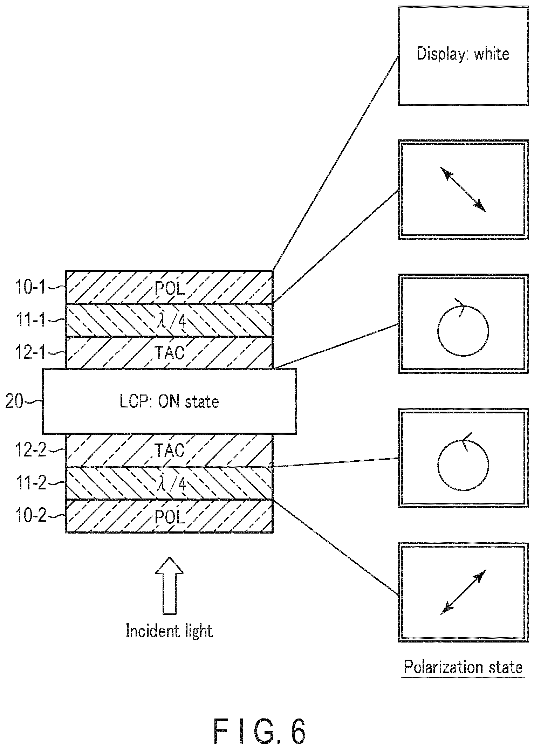

FIG. 6 is a view illustrating an operation of the liquid crystal display 1 in the ON state. In the ON state, the liquid crystal molecules of the liquid crystal layer 22 are aligned so as to tilt toward the horizontal direction. If the wavelength $\lambda$ is $\lambda = 550$ nm, a retardation $\Delta$nd of the liquid crystal layer 22 in the ON state is about 275 nm (= $\lambda/2$). The "$\Delta$n" is the birefringence of the liquid crystal layer, and "d" is the thickness of the liquid crystal layer.

Incident light from the backlight passes through the polarizer 10-2 and becomes linearly polarized light, and further passes through the retardation plate 11-2 and becomes circularly polarized light. Since the liquid crystal layer 22 has $\Delta$nd = 275 nm, the circularly polarized light passes through the liquid crystal layer 22 and becomes circularly polarized light in the opposite rotational direction. Subsequently, the circularly polarized light, which emerges from the liquid crystal layer 22, passes through the retardation plate 11-1 and becomes linearly polarized light. Since this linearly polarized light is parallel to the transmission axis of the polarizer 10-1, the linearly polarized light passes through the polarizer 10-1. Thus, in the ON state, the liquid crystal display 1 effects white display. Specifically, color display corresponding to the color filter is realized.

In the meantime, in order to increase the viewing angle, the TAC films 12-1 and 12-2 are provided. Hereinafter, the operation of optical compensation by the TAC films 12-1 and 12-2 will be described.

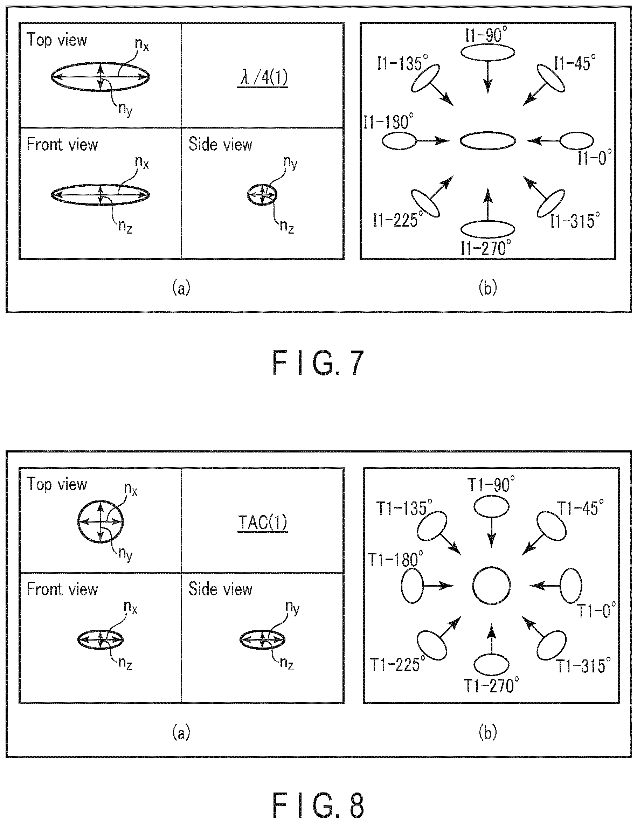

To begin with, index ellipsoids, which schematically indicate refractive indices of the retardation plate 11-1, TAC film 12-1, liquid crystal layer 22, TAC film 12-2 and retardation plate 11-2, will be described in the named order. Incidentally, FIG. 7 to FIG. 11 are schematic views illustrating the index ellipsoids of the members included in the liquid crystal display 1 in the OFF state, and the directions relating to top views, front views and side views are based on FIG. 2.

FIG. 7 is a schematic view illustrating the index ellipsoid of the retardation plate 11-1 (designated by $\lambda/4(1)$). Part (a) of FIG. 7 illustrates the structure of the index ellipsoid, and shows a top view, a front view and a side view of the index ellipsoid. Part (b) of FIG. 7 illustrates the structure of the index ellipsoid in relation to light which is made incident at an angle of 45° from the normal to the screen. In part (b) of FIG. 7, an ellipse (or a circle) at the center is a top view, and eight ellipses therearound are cross-sectional views in a case in which the index ellipsoid is cut by planes perpendicular to the optical axis at an angle of 45° from the normal to the screen, as viewed from eight azimuth directions (0°, 45°, 90°, 135°, 180°, 225°, 270°, and 315°). Specifically, the outline of the refractive indices (birefringence) of the retardation plate 11-1 in relation to light, which is incident (transmits) at the angle of 45° from the normal to the screen, can be understood from part (b) of FIG. 7. Incidentally, the cross sections pass through the center of the index ellipsoid. The same applies to FIG. 8 to FIG. 11 which will be described below.

In the retardation plate 11-1 of FIG. 7, the major axis of the index ellipsoid is directed in the lateral direction in the plane (horizontal plane). This index ellipsoid has a relationship of "$n_x > n_y$". More concrete conditions of the retardation plate 11-1 (and 11-2) will be described later.

FIG. 8 is a schematic view illustrating the index ellipsoid of the TAC film 12-1 (designated by TAC(1)). In the TAC film 12-1 of FIG. 8, the index ellipsoid has a discoidal shape. The TAC film 12-1 is composed of a negative C plate, and the index ellipsoid has a relationship of "$n_x = n_y > n_z$". More concrete conditions of the TAC film 12-1 (and 12-2) will be described later. In the meantime, although the general definition of the negative C plate is "$n_x = n_y > n_z$", it is possible that, strictly speaking, the refractive indices do not become "$n_x = n_y$". Thus, a film having a relationship of "$n_x \fallingdotseq n_y > n_z$" is called "negative C plate".

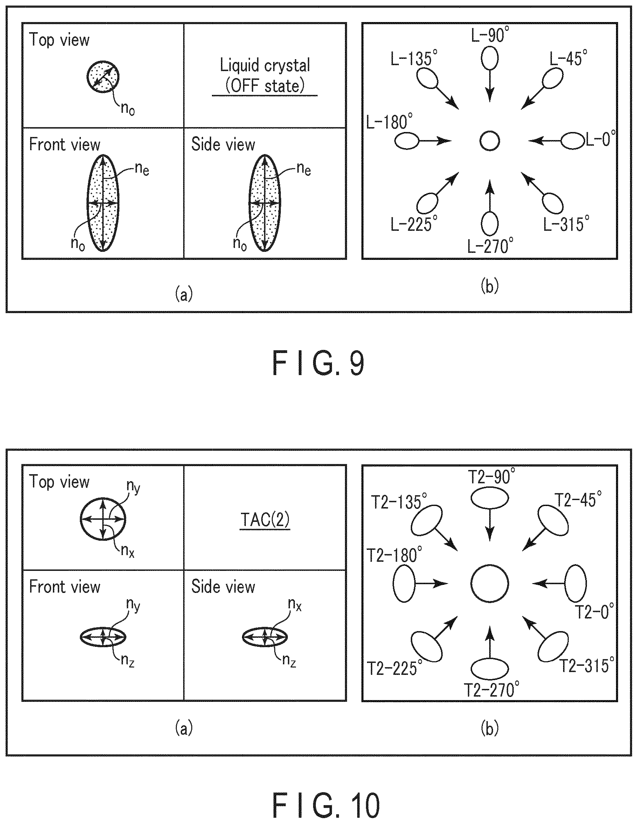

FIG. 9 is a schematic view illustrating the index ellipsoid of the liquid crystal layer 22 in the OFF state. In the liquid crystal layer 22 of FIG. 9, the major axis of the index ellipsoid (liquid crystal molecule) is directed in the vertical direction. A refractive index (refractive index of extraordinary light) along the major axis of the liquid crystal molecule is $n_e$, and a refractive index (refractive index of ordinary light) along the minor axis of the liquid crystal molecule is $n_o$. The liquid crystal layer 22 in the OFF state is composed of a positive C plate, and the index ellipsoid has a relationship of "$n_x = n_y < n_z$". Here, $n_o = n_x = n_y$, and $n_e = n_z$.

FIG. 10 is a schematic view illustrating the index ellipsoid of the TAC film 12-2 (designated by TAC(2)). In the TAC film 12-2 of FIG. 10, the index ellipsoid has a discoidal shape. The TAC film 12-2 is composed of a negative C plate, and the index ellipsoid has a relationship of "$n_x = n_y > n_z$".

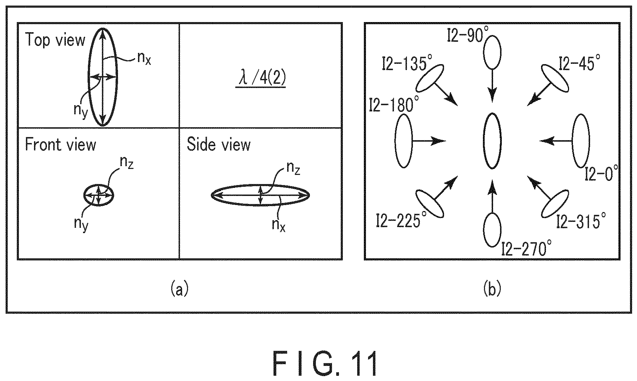

FIG. 11 is a schematic view illustrating the index ellipsoid of the retardation plate 11-2 (designated by $\lambda/4(2)$). In the retardation plate 11-2 of FIG. 11, the major axis of the index ellipsoid is directed in the longitudinal direction in the plane. This index ellipsoid has a relationship of "$n_x > n_y$".

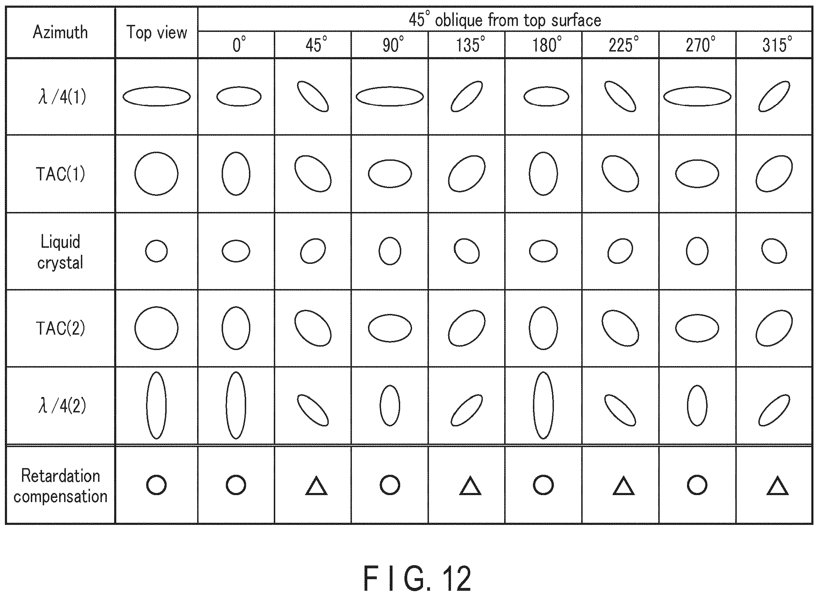

FIG. 12 is a view showing all of the index ellipsoids of FIG. 7 to FIG. 11. FIG. 12 shows the states of birefringence in relation to light that obliquely transmits at 45° from the normal to the screen (top surface), as described above.

As described above, the TAC films 12-1 and 12-2 are composed of negative C plates, and the liquid crystal layer 22 in the OFF state is composed of a positive C plate. As is understood from FIG. 12, the directions of birefringence of the TAC film 12-1, 12-2 and the liquid crystal layer 22 are perpendicular to each other. Thus, the birefringence of the liquid crystal layer 22 is reduced by the birefringence of the TAC film 12-1, 12-2. Thereby, a wide viewing angle can be realized. FIG. 12 shows the effects of retardation compensation. A triangular mark in FIG. 12 means that the contrast ratio is good, and a circular mark in FIG. 12 means that the contrast ratio is better.

Hereinafter, the conditions of the TAC film 12-1, 12-2 and the retardation plate 11-1, 11-2 will be described. It should suffice if the retardation or $N_z$ coefficient is a value at an arbitrary wavelength in the neighborhood of the center of visible light, for example, between 500 nm and 600 nm. It is assumed that the numerical values relating to the TAC films and retardation plates are values in a case of using visible light of wavelength $\lambda = 590$ nm.

The out-of-plane retardation $R_{th}$ of the TAC film 12-1, 12-2 is set to be 20 nm or more and 70 nm or less, and more preferably, 30 nm or more and 60 nm or less. In addition, the in-plane retardation $R_o$ of the TAC film 12-1, 12-2 is set to be 0 or more and 7 nm or less, and more preferably, 0 or more and 5 nm or less.

As illustrated in FIG. 8 and FIG. 10, the slow axis of the TAC film 12-1 is disposed substantially perpendicular to the slow axis of the TAC film 12-2. The slow axis corresponds to the direction of the refractive index $n_x$ (X direction). Thereby, the in-plane retardation of the TAC film 12-1 and the in-plane retardation of the TAC film 12-2 act to cancel each other. Thus, since the in-plane retardation of the entirety of the TAC film 12-1 and TAC film 12-2 can be made smaller (closer to zero), the frontal contrast can be improved. Incidentally, the relationship between the slow axis of the TAC film and the slow axis of the retardation plate can arbitrarily be set.

In the meantime, a retardation $\Delta nd'$ of the liquid crystal layer 22, which acts on the light that passes through the liquid crystal layer 22 in the OFF state at 45° from the normal to the screen, is about 100 nm. A thickness $d'$ is a thickness of the liquid crystal layer 22, which corresponds to the light that passes through the liquid crystal layer 22 at 45° from the normal to the screen. In order to reduce the retardation of this liquid crystal layer 22, it is desirable that the total out-of-plane retardation Rth of the TAC film 12-1 and TAC film 12-2 be about 100 nm.

The in-plane retardation $R_o$ of the retardation plate 11-1, 11-2 is set to be 130 nm or more and 150 nm or less, and more preferably, 135 nm or more and 145 nm or less. In addition, the $N_z$ coefficient of the retardation plate 11-1, 11-2 is set to be 1.4 or more and 1.7 or less, and more preferably, 1.5 or more and 1.65 or less. By setting the $N_z$ coefficient of the retardation plate 11-1, 11-2 to the above condition, the viewing angle dependency, which occurs due to the variation in birefringence depending on the direction of viewing, can be reduced.

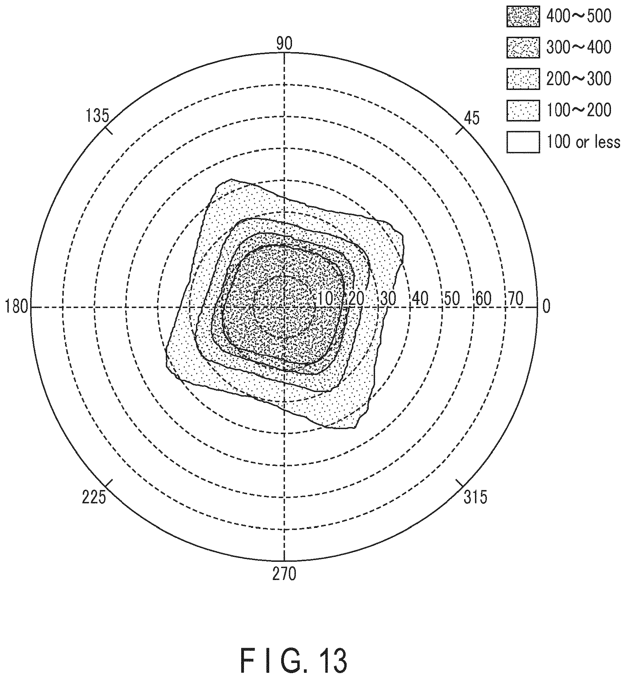

FIG. 13 is a view illustrating a simulation result of a contrast ratio corresponding to a viewing angle. The contrast ratio is defined by a white luminance (maximum luminance)/black luminance (minimum luminance). In FIG. 13, numerical values described on the outermost circumference represent azimuth angles (°), and numerical values, which a plurality of concentric circles represent, indicate angles (°) between the normal passing through the center of the screen (or a certain reference point) and straight lines extending from the center of the screen and passing through measurement points, that is, angles at which the screen is tilted relative to the observer.

FIG. 13 illustrates an area where the contrast ratio is 100 or less, an area where the contrast ratio is greater than 100 and is 200 or less, an area where the contrast ratio is greater than 200 and is 300 or less, an area where the contrast ratio is greater than 300 and is 400 or less, and an area where the contrast ratio is greater than 400 and is 500 or less. As is understood from FIG. 13, the viewing angle can be improved by newly providing the TAC films 12-1 and 12-2, which sandwich the liquid crystal layer 22, in order to reduce the birefringence of the liquid crystal layer 22.

[3] Applied example

Next, an applied example (Example) of the liquid crystal display 1 as previously described will be described. The liquid crystal display 1 is applicable to a head-up display (HUD) device

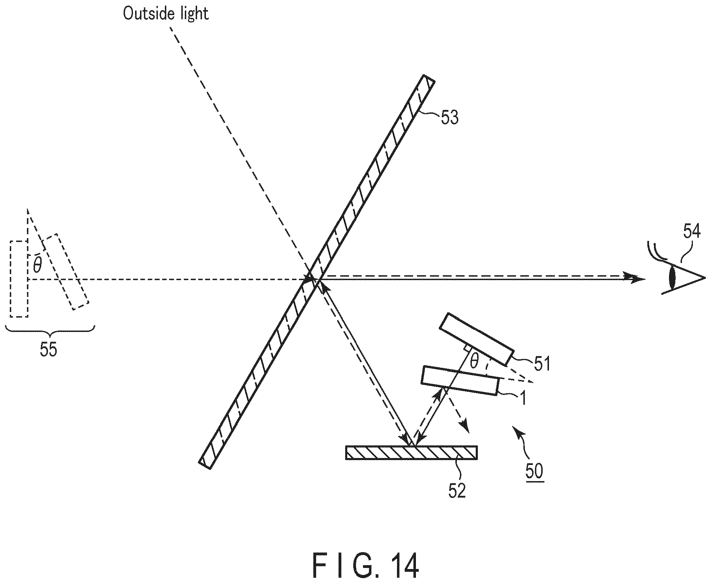

FIG. 14 is a cross-sectional view which schematically illustrates a head-up display device 50 according to the embodiment. The head-up display device 50 includes the liquid crystal display 1 illustrated in FIG. 1, a light source unit 51, a reflecting member 52, and a display member 53.

The light source unit 51 is composed of, for example, a light source (area light source) having a planar shape, and supplies illumination light to the liquid crystal display 1. As a light-emitting element included in the light source unit 51, for example, a white light-emitting diode (LED) is used. The liquid crystal display 1 transmits the illumination light from the light source unit 51, and optically modulates the illumination light. Then, the liquid crystal display 1 displays an image indicating driving information such as a vehicle speed.

The reflecting member 52 is composed of a plane mirror or a concave mirror. The reflecting member 52 reflects display light from the liquid crystal display 1 toward the display member 53. When a concave mirror is used as the reflecting member 52, the concave mirror enlarges the display light from the liquid crystal display 1 with a predetermined enlargement ratio.

The display member 53 is used in order to project the display light that is emitted from the liquid crystal display 1. By reflecting the display light to a driver 54, the display member 53 displays the display light as a virtual image 55. The display member 53 is, for example, a windshield of a vehicle. In addition, the display member 53 may be a semitransparent screen (combiner) which is exclusively provided for the head-up display device 50. The combiner is used, for example, by being disposed on a dashboard of a vehicle, attached to a rearview mirror disposed in front of the driver 54, or attached to a sun visor disposed at an upper part of the windshield.

The combiner is composed of, for example, a plate-shaped base material of a synthetic resin having a curved surface, and an evaporation-deposition film, which is formed of titanium oxide, silicon oxide or the like, is applied to the surface of this base material. The combiner has a semitransmissive function by this evaporation-deposition film.

As shown by a solid line in FIG. 14, illumination light, which is emitted from the light source unit 51, passes through the liquid crystal display 1 and is optically modulated. Display light emerging from the liquid crystal display 1 is reflected by the reflecting member 52, and projected onto the display member 53. The virtual image (display image) 55, which is obtained by the projection of the display light onto the display member 53, is visually recognized by the driver 54. Thereby, the driver 54 can observe the virtual image 55, which is displayed on the front side in the frontal direction of the driver seat, by superimposing the virtual image 55 with the scenery.

On the other hand, as shown by a broken line in FIG. 14, part of outside light passes through the display member 53, is reflected by the reflecting member 52, and is radiated on the liquid crystal display 1. The outside light is various kinds of lights which are incident from the outside of the display member 53 (the side opposite to the side on which the liquid crystal display 1 is disposed), and is, for example, light from the outside, such as sunlight. At this time, if the display surface (screen) of the liquid crystal display 1 and the major surface (surface from which illumination light is emitted) of the light source unit 51 are substantially parallel, that is, if the optical axis of the outside light and the display surface of the liquid crystal display 1 are substantially perpendicular, the light reflected by the liquid crystal display 1 travels along an optical path, which is opposite to the optical path of the outside light, and is projected on the display member 53. Consequently, an unnecessary image, which should not normally be displayed, occurs, resulting in degradation in display quality of the display image which the driver 54 visually recognizes.

Here, the display surface of the liquid crystal display 1 inclines by a predetermined tilt angle $\theta$ to the major surface of the light source unit 51. In other words, the normal to the display surface of the liquid crystal display 1 inclines by the predetermined tilt angle $\theta$ to the optical path of the light source unit 15 (or the optical path of outside light). The tilt angle $\theta$ is greater than 0° and is 45° or less, and is, specifically, 10° or more and 30° or less. Thereby, reflective light, which is outside light reflected by the liquid crystal display 1, is not reflected in the same direction as the display light of the liquid crystal display 1, but is reflected in a direction of an angle $2\theta$ to the optical path of the light source unit 51, as indicated by the broken line in FIG. 14. As a result, it is possible to suppress degradation in display characteristics due to reflective light of the liquid crystal display 1.

Furthermore, as described above, in the liquid crystal display 1 as described above, since the birefringence of the liquid crystal layer 22 is decreased by using the TAC films 12-1 and 12-2, a wide viewing angle can be realized. Thus, even in the case in which the display surface of the liquid crystal display 1 and the major surface of the light source unit 51 are inclined by the predetermined tilt angle $\theta$, as illustrated in FIG. 14, the degradation in display characteristics of the liquid crystal display 1 can be suppressed.

[4] Comparative example

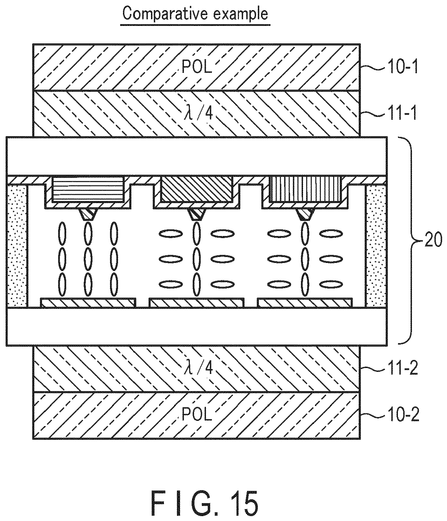

Next, a liquid crystal display according to a comparative example will be described. FIG. 15 is a cross-sectional view illustrating the configuration of the liquid crystal display according to the comparative example.

The comparative example does not include the TAC films 12-1 and 12-2 of the liquid crystal display as previously described. Specifically, the retardation plate 11-1 and polarizer 10-1 are stacked on one major surface of the liquid crystal panel 20, and the retardation plate 11-2 and polarizer 10-2 are stacked on the other major surface of the liquid crystal panel 20.

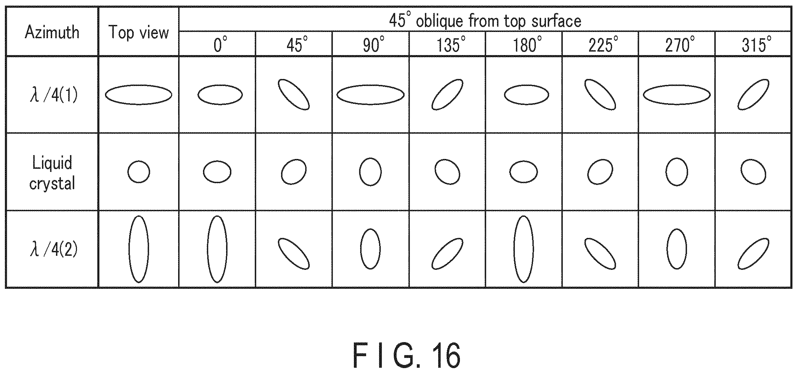

FIG. 16 is a view illustrating index ellipsoids according to the comparative example. Like FIG. 12, FIG. 16 shows the states of birefringence in relation to light that obliquely transmits at 45° from the normal to the screen (top surface). FIG. 16 shows the states of birefringence of the liquid crystal layer in the OFF state.

In the comparative example, the birefringence of the liquid crystal layer is not decreased. Thus, compared to the previously described liquid crystal display, in the liquid crystal display according to the comparative example, a wide viewing angle cannot be realized.

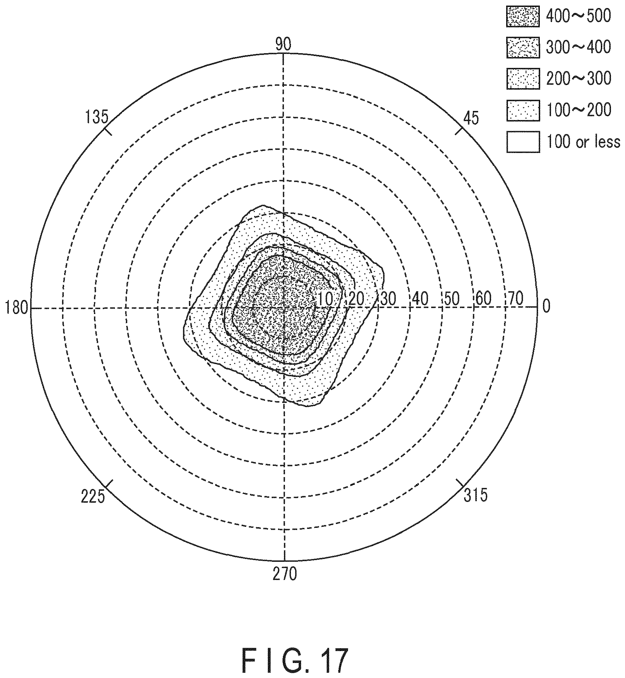

FIG. 17 illustrates a simulation result of a contrast ratio corresponding to a viewing angle according to the comparative example. If FIG. 13 and FIG. 17 are compared, it can be understood that in the liquid crystal display as previously described, compared to the comparative example, the viewing angle is improved.

[5] Advantageous effects

As has been described above in detail, the liquid crystal display 1 includes the vertical alignment (VA) type liquid crystal panel 20; the TAC films 12-1 and 12-2 which sandwich the liquid crystal panel 20; the retardation plates 11-1 and 11-2 which sandwich the TAC films 12-1 and 12-2; and the polarizers 10-1 and 10-2 which sandwich the retardation plates 11-1 and 11-2. In addition, while the liquid crystal layer 22 in the OFF state is composed of the positive C plate, the TAC films 12-1 and 12-2 are composed of the negative C plates.

Therefore, when the screen of the liquid crystal display 1 is obliquely viewed, the TAC films 12-1 and 12-2 function to decrease the birefringence of the liquid crystal layer 22. Thereby, when the screen of the liquid crystal display 1 is obliquely viewed in the OFF state, the birefringence of the liquid crystal display 1 can be decreased. As a result, the viewing angle characteristics of the contrast ratio can be improved. Specifically, since the display (black display) in the OFF state can be more improved, the contrast ratio can be enhanced.

In the meantime, in the present specification, the plates or films are expressions illustrating the associated members, and the restriction to these structures is unnecessary. Specifically, the retardation plate is not limited to a plate-like member, and may be a film or some other member having the function described in the specification. The polarizer is not limited to a plate-like member, and may be a film or some other member having the function described in the specification. The TAC film is not limited to a film-like member, and may be a layer or some other member having the function described in the specification.

Besides, the liquid crystal display as previously described is applicable to various displays other than the head-up display device, in particular, to various displays in which wide viewing angle characteristics are desired. For example, the liquid crystal display is applicable to a television, a personal computer, a mobile phone, a mobile information terminal, a game console, a car navigation apparatus, an electronic dictionary, a digital still camera, a video camera, and various monitors.

The present invention is not limited to the embodiments described above, but is limited by the appended claims.

Reference Signs List

1...Liquid crystal display, 10...Polarizer, 11...Retardation plate, 12...TAC film, 20...Liquid crystal panel, 21...Substrate, 22...Liquid crystal layer, 23...Seal member, 24... Switching element, 25...Insulating layer, 26...Pixel electrode, 27...Contact plug, 28...Color filter, 29...Common electrode, 30...Protrusion, 50...Head-up display device, 51...Light source unit, 52...Reflecting member, 53...Display member, 54...Driver, 55... Virtual image.

**Claims**

1. A head-up display device (50) comprising:

   a light source unit (51);
   a liquid crystal panel (20) of a vertical alignment, VA,
   type which transmits light from the light source unit (51);
   first and second TAC, triacetyl cellulose, films (12-1, 12-2) which sandwich the liquid crystal panel;
   first and second retardation plates (11-1, 11-2) which sandwich the first and second TAC films, each of the first and second retardation plates imparting retardation of a 1/4 wavelength; and

   first and second polarizers (10-1, 10-2) which sandwich the first and second retardation plates, wherein a line perpendicular to a display surface of the liquid crystal panel (20) is inclined relative to a line perpendicular to a major light emitting surface of the light source unit (51),
   the liquid crystal panel includes a liquid crystal layer (22), the liquid crystal layer (22) in an off-state being a positive C plate,
   each of the first and second TAC films (12-1, 12-2) is a negative C plate,
   the first and second polarizers (10-1, 10-2) include first and second absorption axes, respectively, which are substantially perpendicular to each other,
   the first and second retardation plates (11-1, 11-2) include first and second slow axes, respectively, which are substantially perpendicular to each other,
   the first and second slow axes intersect at about 45° with the first and second absorption axes, respectively,
   the first and second TAC films (12-1, 12-2) include third and fourth slow axes, respectively, which are substantially perpendicular to each other,
   each of the first and second TAC films (12-1, 12-2) has an out-of-plane retardation of 20 nm or more and 70 nm or less, and has an in-plane retardation of 7 nm or less, for a wavelength of 590 nm,
   each of the first and second retardation plates (11-1, 11-2) has an in-plane retardation of 130 nm or more and 150 nm or less, and has an $N_z$ coefficient of 1.4 or more and 1.7 or less, for a wavelength of 590 nm, and

   $$N_z = (n_x - n_z)/(n_x - n_y)$$

   where $n_x$ is a refractive index in a slow axis direction, $n_y$ is a refractive index in a fast axis direction, and $n_z$ is a refractive index in an out-of-plane direction.

2. The head-up display device (50) of Claim 1, further comprising a reflecting member (52) which reflects light, which passes through the liquid crystal panel (20), toward a display member (53).

3. The head-up display device (50) of Claim 1, wherein an angle formed between the line perpendicular to the display surface of the liquid crystal panel (20) and the line perpendicular to the major light emitting surface of the light source unit (51) is 10 degree or more and 30 degree or less.

**Patentansprüche**

1. Blickfeldanzeigevorrichtung (50), mit:

    einer Lichtquelleneinheit (51);
    einem Flüssigkristallbildschirm (20) eines Bautyps einer vertikalen Ausrichtung, VA, der Licht von der Lichtquelleneinheit (51) überträgt;
    ersten und zweiten TAC-, Triacetylzellulose-, Filmen (12-1, 12-2), die den Flüssigkristallbildschirm sandwichen;
    ersten und zweiten Verzögerungsplatten (11-1, 11-2), die die ersten und zweiten TAC-Filme sandwichen, wobei jede der ersten und zweiten Verzögerungsplatten eine Verzögerung von einer 1/4-Wellenläng vermittelt; und
    ersten und zweiten Polarisatoren (10-1, 10-2), die die ersten und zweiten Verzögerungsplatten sandwichen,
    wobei eine Linie senkrecht zu einer Anzeigeoberfläche des Flüssigkristallbildschirms (20) relativ zu einer Linie senkrecht zu einer lichtemittierenden Hauptoberfläche der Lichtquelleneinheit (51) geneigt ist,
    der Flüssigkristallbildschirm eine Flüssigkristallschicht (22) umfasst, wobei die Flüssigkristallschicht (22) in einem ausgeschalteten Zustand eine positive C-Platte ist,
    jede der ersten und zweiten TAC-Filme (12-1, 12-2) eine negative C-Platte ist,
    die ersten und zweiten Polarisatoren (10-1, 10-2) jeweils erste und zweite Absorptionsachsen umfassen, die im Wesentlichen senkrecht zueinander sind,
    die ersten und zweiten Verzögerungsplatten (11-1, 11-2) jeweils erste und zweite langsame Achsen umfassen, die im Wesentlichen senkrecht zueinander sind,
    die ersten und zweiten langsamen Achsen sich bei etwa 45° mit jeweils den ersten und zweiten Absorptionsachsen schneiden,
    die ersten und zweiten TAC-Filme (12-1, 12-2) jeweils dritte und vierte langsame Achsen umfassen, die im Wesentlichen senkrecht zueinander sind,
    jede der ersten und zweiten TAC-Filme (12-1, 12-2) eine Verzögerung von 20 nm oder mehr und 70 nm oder weniger außerhalb der Ebene aufweist, und eine Verzögerung von 7 nm oder weniger in der Ebene aufweist, für eine Wellenlänge von 590 nm,
    jede der ersten und zweiten Verzögerungsplatten (11-1, 11-2) eine Verzögerung in der Ebene von 130 nm oder mehr und 150 nm oder weniger aufweist, und einen $N_Z$-Koeffizienten von 1,4 oder mehr und 1,7 oder weniger aufweist, für eine Wellenlänge von 590 nm, und

$$N_Z = (n_X - n_Z)/(n_X - n_Y)$$

    wobei $n_X$ ein Brechungsindex in einer langsamen Achsenrichtung ist, ny ein Brechungsindex in einer schnellen Achsenrichtung ist, und nz ein Brechungsindex in einer Richtung außerhalb der Ebene ist.

2. Blickfeldanzeigevorrichtung (50) nach Anspruch 1, ferner mit einem reflektierenden Element (52), das Licht, das den Flüssigkristallbildschirm (20) durchläuft, in Richtung eines Anzeigeelements (53) reflektiert.

3. Blickfeldanzeigevorrichtung (50) nach Anspruch 1, wobei ein Winkel, der zwischen der Linie senkrecht zu der Anzeigenoberfläche des Flüssigkristallbildschirms (20) und der Linie senkrecht zu der lichtemittierenden Hauptoberfläche der Lichtquelleneinheit (51) ausgebildet ist, 10 Grad oder mehr und 30 Grad oder weniger beträgt.

**Revendications**

1. Dispositif d'affichage tête haute (50) comprenant :

    une unité de source de lumière (51) ;
    un panneau à cristaux liquides (20) d'un type à alignement vertical, VA, qui transmet de la lumière provenant de l'unité de source de lumière (51) ;
    des premier et second films (12-1, 12-2) de triacétylcellulose, TAC, qui enserrent le panneau à cristaux liquides ;
    des première et seconde plaques de retardement (11-1, 11-2) qui enserrent les premier et second films TAC, chacune des première et seconde plaques de retardement conférant un retardement d'1/4 de longueur d'onde ; et
    des premier et second polariseurs (10-1, 10-2) qui enserrent les première et seconde plaques de retardement,
    dans lequel une ligne perpendiculaire à une surface d'affichage du panneau à cristaux liquides (20) est inclinée par rapport à une ligne perpendiculaire à une surface d'émission de lumière principale de l'unité de source de lumière (51),
    le panneau à cristaux liquides comprend une couche de cristaux liquides (22), la couche de cristaux liquides (22) dans un état bloqué étant une plaque C positive,
    chacun des premier et second films TAC (12-1, 12-2) est une plaque C négative,
    les premier et second polariseurs (10-1, 10-2) comprennent des premier et second axes d'absorption, respectivement, qui sont sensiblement perpendiculaires l'un à l'autre,

les première et seconde plaques de retardement (11-1, 11-2) comprennent des premier et deuxième axes lents, respectivement, qui sont sensiblement perpendiculaires l'un à l'autre,

les premier et deuxième axes lents recoupent à environ 45° les premier et second axes d'absorption, respectivement,

les premier et second films TAC (12-1, 12-2) comprennent des troisième et quatrième axes lents, respectivement, qui sont sensiblement perpendiculaires l'un à l'autre,

chacun des premier et second films TAC (12-1, 12-2) a un retardement hors plan de 20 nm ou plus et de 70 nm ou moins, et a un retardement dans le plan de 7 nm ou moins, pour une longueur d'onde de 590 nm,

chacune des première et seconde plaques de retard (11-1, 11-2) a un retardement dans le plan de 130 nm ou plus et de 150 nm ou moins, et a un coefficient $N_z$ de 1,4 ou plus et de 1,7 ou moins, pour une longueur d'onde de 590 nm, et

$$N_z = (n_x - n_z)/(n_x - n_y)$$

où $n_x$ est un indice de réfraction dans une direction d'axe lent, $n_y$ est un indice de réfraction dans une direction d'axe rapide, et $n_z$ est un indice de réfraction dans une direction hors plan.

2. Dispositif d'affichage tête haute (50) selon la revendication 1, comprenant en outre un élément réfléchissant (52) qui réfléchit la lumière, qui passe à travers le panneau à cristaux liquides (20), vers un élément d'affichage (53).

3. Dispositif d'affichage tête haute (50) selon la revendication 1, dans lequel un angle formé perpendiculairement entre la ligne perpendiculaire à la surface d'affichage du panneau à cristaux liquides (20) et la ligne perpendiculaire à la surface d'émission de lumière principale de l'unité de source de lumière (51) est de 10 degrés ou plus et de 30 degrés ou moins.

F I G. 1

Absorption axis
45°
10-1

Slow axis  0°
11-1

12-1

20

12-2

Slow axis
90°
11-2

Absorption axis
135°
10-2

# F I G. 2

FIG. 3

F I G. 4

EP 3 249 456 B1

FIG. 5

FIG.6

F I G. 7

F I G. 8

F I G. 9

F I G. 10

F I G. 11

| Azimuth | Top view | 45° oblique from top surface | | | | | | | |
|---|---|---|---|---|---|---|---|---|---|
| | | 0° | 45° | 90° | 135° | 180° | 225° | 270° | 315° |
| $\lambda/4(1)$ | ⬭ | ⬭ | ⬭ | ⬭ | ⬭ | ⬭ | ⬭ | ⬭ | ⬭ |
| TAC(1) | ◯ | ⬭ | ⬭ | ⬭ | ⬭ | ⬭ | ⬭ | ⬭ | ⬭ |
| Liquid crystal | ◯ | ◯ | ◯ | ◯ | ◯ | ◯ | ◯ | ◯ | ◯ |
| TAC(2) | ◯ | ⬭ | ⬭ | ⬭ | ⬭ | ⬭ | ⬭ | ⬭ | ⬭ |
| $\lambda/4(2)$ | ⬭ | ⬭ | ⬭ | ⬭ | ⬭ | ⬭ | ⬭ | ⬭ | ⬭ |
| Retardation compensation | ○ | ○ | △ | ○ | △ | ○ | △ | ○ | △ |

F I G. 12

FIG. 13

Outside light

53

54

55

θ

51

θ

1

52

50

F I G. 14

Comparative example

FIG. 15

F I G. 16

F I G. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5265614 B
- US 20100289988 A1
- US 2012120349 A1
- US 2002154256 A1
- JP 2009053614 A
- JP 2009258346 A